# EUROPEAN PATENT APPLICATION

(11) **EP 1 522 695 A1**
(43) Date of publication of application: **13.04.2005**
(21) Application number: 04029754.1
(22) Date of filing: 20.10.1995
(51) Int. Cl.: F02C 3/30, F22B 1/26, F01K 21/04

(54) **Combustor cooling for gas turbine engines**

(62) Divisional of application: 95939562.5
(71) Applicant: Griffin, Arthur, T., Jr., Detroit, MI 48214 (US)
(72) Inventor: Griffin, Arthur, T., Jr., Detroit, MI 48214 (US)
(74) Representative: Neumann, Ernst Dieter, Dipl.-Ing.

(57) **Abstract**

A combustor 12 for generating combustion products for delivery to a gas turbine 10, said combustor 12 comprising:
a central combustion chamber 22 having one end 12c and defining a central axis;
a burner 26 to deliver products of combustion to said one end 12c of said central combustion chamber 22;
a discharge at the opposite end 12b of said central combustion chamber 22 for delivering combustion products to said turbine 10;
an annular cooling chamber 24 in surrounding relation to said central combustion chamber 22;
an entry opening 12g in said annular cooling chamber 24 for receipt of a cooling fluid, said entry opening 12g being arranged adjacent to said one end 12c of said central combustion chamber 22, said cooling fluid forming a bath 44 within said annular cooling chamber 24 to absorb thermal energy from said combustion products being within said central combustion chamber 22; and
a plurality of apertures 12e providing communication between said annular cooling chamber 24 and said central combustion chamber 22 proximate said opposite end 12b of said central combustion chamber 22,
wherein the burner 26 is disposed axially adjacent to said one end 12c of said central combustion chamber 22 and said cooling chamber 24.

## Description

### Background of the invention

This invention relates to gas turbine engines and more particularly to improved methods and apparatus for cooling the combustor and combustion gases of a gas turbine engine.

It is important to provide cooling for the combustor and combustion gases of a gas turbine engine in order to maintain the combustor, turbine, and combustion gas conduits of the engine below the temperature at which thermal failure occurs and to also limit the formation of nitric oxide (NOₓ). Various methods and apparatus have been utilized in the past to achieve combustor and combustion gas cooling including passage of cooling air over and through the combustor, the injection of steam into the combustor cooling air, the injection of a water spray into the combustor cooling air, and various combinations of these methodologies and apparatuses. Whereas these prior art methodologies are useful in lowering the temperature of the combustor and combustion gases, the cooling is achieved through losses in the overall engine system since the work required to deliver the primary coolant, air, is excessive, and the quantity of energy recoverable with the small steam and/or water injection rates permitted is negligible.

From US 2 359 108 it is known a device comprising a combustion chamber for a steam turbine. The combustion chamber comprises spaced inner and outer walls to provide a jacket for water to be heated by the combustion gases produced in the combustion chamber. One end of the combustion chamber provides a nozzle which is connected to a widening discharge opening. A plurality of longitudinally directed jets disposed in annular concentric arrangement to the discharge opening issues the water exteriorly of the chamber discharge opening. Inside the combustion chamber opposite the discharge opening a jet is provided for spraying fuel into the chamber.

US 3 238 719 discloses a gas turbine engine with a combustor. The combustor comprises a combustion chamber and a burner disposed within the combustion chamber. An annular cooling chamber is arranged in surrounding relation to the combustion chamber, wherein an entry opening is provided for receipt of coolant. A portion of the coolant is not ejected through sidewalls but rather flows into a centrally located spray head. The portion that is not ejected through this spray head can flow directly to the hot gas duct leading from the combustor outlet without entering the combustion chamber.

It is known from US 5 002 483 a similar combustor having a primary stage for precombustion of a fuel-rich mixture and a secondary stage for the remaining combustion. The walls of the primary stage are surrounded by a nitrogen supply system and have openings through which the coolant can flow. The coolant enters the combustion chamber in a vapour phase. To provide initial cooling of the combustion gases downstream of the primary stage, there are provided further inlet openings in the vicinity of the end of the primary stage for the supply of still further coolant.

In US 3 359 723 it is disclosed a combustor for a gas turbine engine. The combustor comprises a combustion chamber with three zones and an annular first cooling chamber and an annular second cooling chamber. Fuel is injected in the primary zone where the complete combustion occurs. Excess air is passed about the exterior of the first chamber to cool the outer walls of this first chamber. Steam is introduced into the first chamber and flows along the walls of the primary zone. The hot combustion gases flow into the secondary zone wherein the hot gases are mixed with the steam which flows through apertures from the first cooling chamber into the combustion chamber. The tertiary zone is a quench zone where the excess air is introduced to cool the combustion gases mixed with steam.

### Summary of the invention

This invention is directed to the provision of an improved gas turbine engine assembly.

More specifically, this invention is directed to the provision of an improved combustor for a gas turbine engine assembly.

Yet more specifically, this invention is directed to the provision of an improved method and apparatus for cooling the combustor and combustion gases of a gas turbine engine assembly.

The invention discloses a method of cooling the combustor and combustion gases of a gas turbine engine assembly of the type including a turbine and a combustor arranged to receive a fuel/air mixture and generate products of combustion within the combustor for delivery to the turbine.

According to the invention, a fluid is delivered to the combustor by a pump and is placed in heat exchange relation with the combustion products within the combustor so that thermal energy is absorbed from the combustion products by the fluid, and the fluid is thereafter injected into the combustion products for delivery with the combustion products to the turbine. This methodology allows combustor cooling to be achieved with a minimum of energy loss in the total system, thereby maximizing the overall efficiency of the total system. The burner is disposed axially adjacent to the one end of the central combustion chamber and to said cooling chamber. This arrangement is advantageous in that the cooling chamber is arranged axially in surrounding relation to the flame front which is defined by the burner.

According to a preferred embodiment the combustor is designed such that the flow rate of the cooling fluid is variable. By this means, the behaviour of the cooling fluid can be controlled depending upon the pressure and the temperature at which the cooling fluid is delivered to the cooling chamber. In one embodiment, liquid is delivered to the combustor where it is placed in heat exchange relation with the combustion products before being injected into the combustion gases as liquid. In a further embodiment of the invention, liquid is delivered to the combustor where it is placed in heat exchange relation with the combustion products before being injected into the combustion gases as gas or vapour. In a further embodiment of the invention, gas or vapour is delivered to the combustor where it is placed in heat exchange relation with the combustion products before being injected into the combustion gases as gas or vapour. The cooling chamber is closed at its end which is opposite to the burner by a circular upper wall. Thus, the cooling fluid is necessarily injected in its higher energy level from the cooling chamber into the combustion chamber for mixture with the combustion products.

According to a further feature of the invention methodology, the combustor has a central combustion chamber for containing the combustion products and an annular cooling chamber in surrounding relation to the central combustion chamber and having apertures communicating with the central combustion chamber; the step of placing the fluid in heat exchange relation with the combustion comprises delivering the fluid to the annular cooling chamber in its low energy liquid phase; the conversion of the fluid to a higher level of energy occurs in the annular cooling chamber; and the step of injecting the fluid into the combustor comprises passing the fluid in its relatively high energy condition through the apertures and into the central combustion chamber.

According to a further feature of the invention, the turbine engine assembly includes a shaft driven by the turbine and a pump driven by the shaft and the fluid is delivered to the combustor by the pump.

The invention also provides an improved combustor for generating combustion products for delivery to a gas turbine. The improved combustor includes a central combustion chamber defining a central axis; a burner positioned to deliver products of combustion to one end of the chamber; a discharge at the other end of the chamber for delivering combustion products to the turbine; an annular cooling chamber in surrounding relation to the central combustion chamber; an entry opening in the cooling chamber for receipt of a cooling liquid, and a plurality of apertures communicating the cooling chamber with the central combustion chamber. This combustor construction allows the cooling fluid to be placed in heat exchange relation to the combustor so that thermal energy is absorbed from the combustion products within the combustor before the fluid is injected in to the combustor through the apertures interconnecting the cooling chamber and central combustion chamber.

According to a further feature of the invention, the combustor is positioned with its central axis generally vertical; the burner is proximate the lower end of the combustion chamber; the discharge is proximate the upper end of the combustion chamber; and the entry opening in the cooling chamber is proximate the lower end of the combustion chamber. This specific arrangement and orientation of the combustor facilitates the placement of the cooling fluid in heat exchange relation to the combustion chamber.

The invention also provides an improved gas turbine engine assembly. The improved gas turbine engine assembly includes a turbine driving a shaft; a combustor operative to generate products of combustion for delivery to the turbine; a source of cooling liquid; and a pump driven by the turbine shaft, having an inlet connected to the liquid source, and having an outlet connected to the combustor. This arrangement allows a cooling liquid to be delivered to the combustor by a pump driven by the turbine, to ' improve the overall efficiency of the assembly.

According to a further feature of the invention, the combustor includes a central combustion chamber and an annular cooling chamber in surrounding relation to the central combustion chamber and connected to the combustion chamber by a plurality of apertures; the pump outlet is connected to the cooling chamber of the combustor by conduit means; and the assembly further includes a heat exchanger in the conduit means, the heat exchanger receiving the discharge of the turbine. This arrangement allows the energy content of the cooling fluid to be increased by utilizing the waste products of the turbine.

According to a further feature of the invention, the assembly further includes means for delivering further energy to the fluid flowing through the conduit means. In the disclosed embodiment of the invention, the energy delivery means comprises a boiler arranged in the conduit interconnecting the pump to the cooling chamber of the combustor.

### Brief Description of the Drawings

Figure 1 is a perspective, partially cross sectional view of a gas turbine engine assembly according to the invention;
Figure 2 is a somewhat schematic view of the gas turbine engine assembly of Figure 1;
Figure 3 is a somewhat schematic view of a modified form of the gas turbine engine assembly according to the invention; and
Figure 4 is a somewhat schematic view of a still further modified form of the gas turbine engine assembly according to the invention.

### Detailed Description of the Preferred Embodiment

Each of the invention embodiments is of the type including a turbine 10 of know form having an inlet 10a and outlet 10b; a combustor 12 arranged to deliver products of combustion to inlet 10a of the turbine and thereby drive the turbine; a compressor 14 drive by shaft 16 of the turbine and including an inlet 14a connected to a source of fuel and an outlet 14b for delivering the fuel in pressurized form to the combustor; and a compressor 18 driven by shaft 16 and having an inlet 18a connected to a source of air and an outlet 18b for delivering pressurized air to the combustor for mixture with the fuel from compressor 14 to provide a fuel/air mixture for combustion in the combustor to produce combustion products for delivery to the turbine to drive the turbine.

The invention provides an improved combustor 12 as well as an improved means of cooling the combustor.

The invention combustor has a generally cylindrical configuration and defines a central vertical axis 20. Combustor 12 includes cylindrical outer wall 12a; a circular upper wall 12b; a circular lower wall 12c; an inner cylindrical wall 12d defining a central cylindrical combustion chamber 22 and concentrically coacting with outer wall 12a to define an annular cooling chamber 24; a plurality of apertures 12e in inner wall 12d providing communication between annular cooling chamber 24 and central combustion chamber 22; a central discharge aperture 12f in upper wall 12b; an opening 12g in lower wall 12c within annular cooling chamber 24; and a burner 26 positioned centrally in lower wall 12c. Apertures 12e are arranged in vertically spaced rows with each row including a plurality of circumferentially and equally spaced apertures. The rows of apertures begin in the midregion of inner wall 12d and extend upwardly to a topmost row proximate discharge aperture 12f, that is, there are no apertures in the lower region 12h of inner wall 12d.

Burner 26 provides a pre-combustor for combustor 12 in the sense that the actual combustion process takes place within burner 26 utilizing air delivered to the burner from compressor 18 via a conduit 28, and fuel delivered to the burner from compressor 14 via conduit 30. The fuel and air are mixed within the burner and combusted within the burner to define flame front 32 within central combustion chamber 22. Burner 26 may take various forms and, for example, may include a housing 26a an electrode 26b supplied by electrical conductors 34 and functioning in a known manner to combust the fuel and air mixture within housing 26a for delivery into combustion chamber 22 to form flame front 32. Burner 26 may, for example, comprise a gas, coal or fuel oil burner available from Maxon Corporation of Muncie, Indiana as Part No. WR-3. It will be understood that whereas the initial combustion of the fuel/air mixture occurs within burner 26, post combustion also occurs within combustion chamber 22. Discharge opening 12f of the combustor is connected via hood 36 and conduit 38 to inlet 10a of turbine 10 so that the products of combustion generated within combustion chamber 22 are delivered to the turbine inlet to drive the turbine.

The cooling of the combustor is accomplished by cooling chamber 24 in coaction with pump 40 and conduit 42. Pump 40 is a liquid pump and may take various forms, including a gear pump, a lobe pump, a rotary pump or a centrifugal pump. A centrifugal pump is illustrated and includes an inlet 40a connected to a source (not illustrated) of liquid such as water and an impeller 40b mounted on shaft 16 and including a circumferentially spaced series of curved vanes 40c. It will be understood that when the impeller is driven by shaft 16, liquid is drawn in through inlet 40a from the liquid source, passes between the vanes of the impeller, and is thereafter thrown outward by centrifugal force for passage through pump outlet 40d and into conduit 42

Conduit 42 extends from pump outlet 40b to the inlet opening 12g in the cooling chamber of the combustor so that cooling liquid from pump 40 is conveyed by conduit 42 to annular cooling chamber 24.

During steady state operation of the gas turbine engine assembly, fuel and air id delivered to the combustor via conduits 30 and 28, respectively for combustion in the combustor to form flame front 32 within central combustion chamber 22 of the combustor, the combustion products from the combustion chamber are delivered via conduit 38 to the inlet of the turbine to drive the turbine, and the turbine shaft drives pump 40 and compressors 14 and 18 to provide continuous delivery of fuel and air to the combustor and to further provide delivery of a cooling fluid to annular cooling chamber 24 of the combustor via conduit 42.

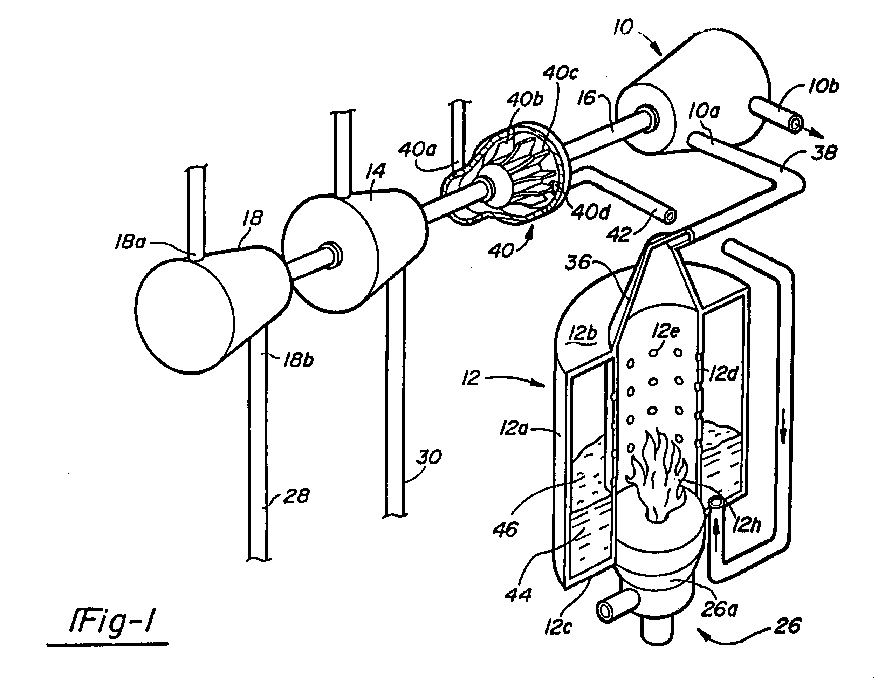

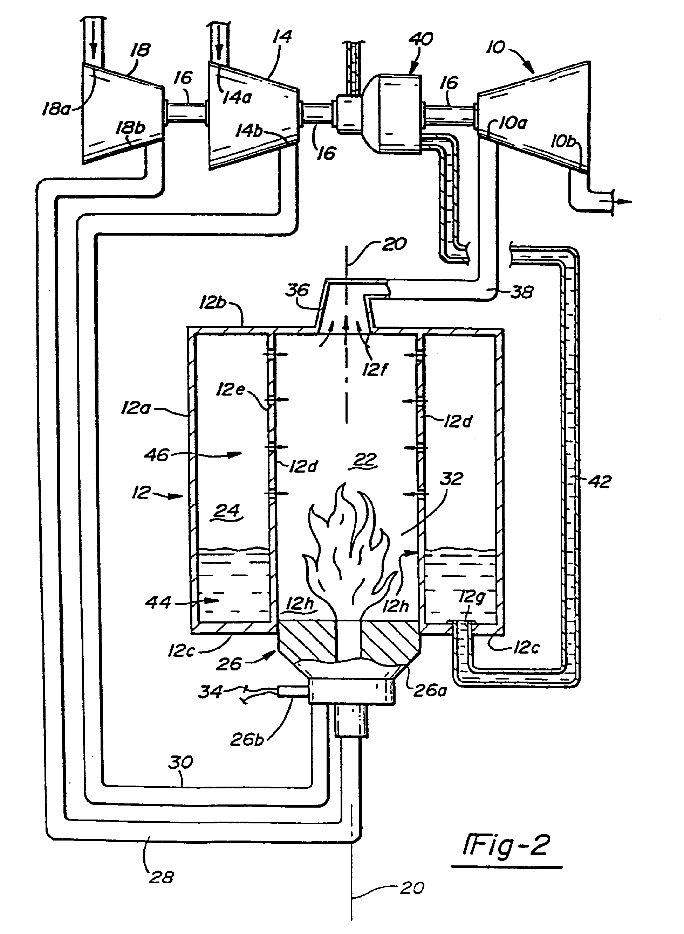

The behavior of the cooling fluid in annular cooling chamber 24 will vary depending upon the pressure and temperature at which fluid id delivered to the cooling chamber. For example, and as shown in Figures 1 and 2, water may be delivered to cooling chamber 24 in a steady state manner at 30 bars and 300° Kelvin, in which case, assuming combustion chamber 22 is operating at 25 bars and 2,300° Kelvin at flame front 32 with an arbitrary combustion rate of 150 kilowatts, the gas turbine engine assembly can be sized such that water can be maintained in the lower end of the annular combustion chamber, below lowermost aperture 12e, to form annular water bath 44. Water bath 44 absorbs energy from the combustion products within the combustion chamber through inner wall 12d with the result that the water is converted to a vapor or steam phase 46 which forms in cooling chamber 24 above bath 44 and thereafter passes through apertures 12e and into combustion chamber 22 where it mixes with the combustion products within the combustion chamber and passes with the combustion products through hood 36 and conduit 38 to the inlet of the turbine to drive the turbine.

The energy absorbed from the flame front by the annular body of water 44 (representing the energy required to change the water from a liquid to a gas phase) together with the cooling effect of the vapor as it passes through apertures 12e and joins the combustion products within the combustion chamber, has the effect of reducing the temperature of the combustion products leaving the combustor through aperture 12f to approximately 1140° kelvin. This temperature is low enough to ensure that the combustor does not suffer thermal failure and is further low enough to ensure that there is no significant NOₓ formation within the combustor.

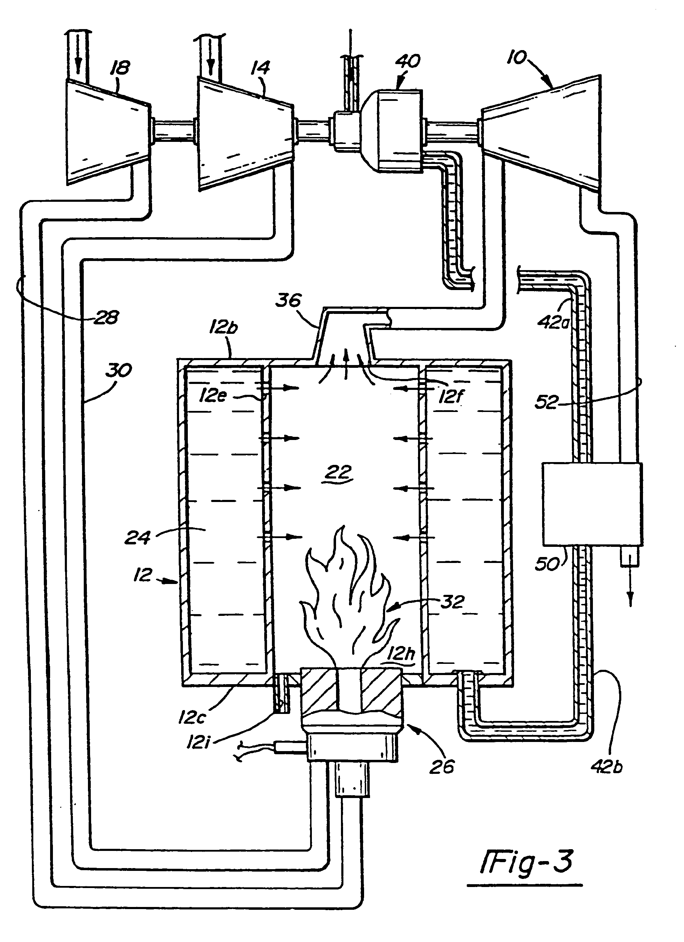

The modified gas turbine engine assembly shown in Figure 3 is generally similar to the assembly shown in Figures 1 and 2 with the exception that the assembly in Figure 3 further includes a heat exchanger 50 positioned in conduit 42 and arranged to receive the discharge from outlet 10b of the turbine through conduit 52 and place the discharge products from the gas turbine in heat exchange relation to the cooling fluid flowing through conduit 42, whereby to add energy to the fluid so that the fluid arriving at inlet 12g of the combustor has a higher energy content than the fluid leaving pump 40.

As with the assembly of Figures 1 and 2, the nature and behavior of the fluid within cooling chamber 24 may be selectively varied by selective variation of the temperature and pressure under which the cooling fluid is delivered to the cooling chamber through conduit 42. For example, water may be delivered to heat exchanger 50 in a steady state manner at 100 bars and 300° Kelvin, and thermal energy may ideally be added to the water so that it enters conduit 42b, for delivery to cooling chamber 24 at 100 bars and 584° Kelvin. When the water enters inlet 12g at 100 bars and 584° Kelvin, cooling chamber 24 is totally filled with water, and again assuming combustion chamber 22 is operating at 25 bars and 2300° Kelvin at flame front 32 with an arbitrary combustion rate of 150 kilowatts, the gas turbine engine assembly can be sized such that thermal energy is absorbed through wall 12d from flame front 32 so as to cool the flame front and raise the temperature of the water. In this embodiment, with the given parameters, water passes through apertures 12e in a still liquid form and undergoes a phase change immediately upon entering combustion chamber 22 whereby to extract further energy from the flame front by virtue of the energy required to change the water to a gas or vapor, whereafter the gas or vapor passes out of the combustion chamber through discharge opening 12f for delivery with the combustion products to the inlet of the gas turbine. As with the assembly shown in Figures 1 and 2, the combined effect of the energy absorbed by the water residing in annular cooling chamber 24, together with the energy required to accomplish the phase change of the water as it passes through openings 12e and encounters the flame front, has the effect of lowering the combustor temperature to a point (for example, 1140° Kelvin at discharge aperture 12f) where thermal failure of the combustor is prevented and not significant NOₓ forms.

It should be understood that, in the embodiment of Figure 3, the cooling flow rate can be increased such that coolant can pass through apertures 12e in liquid form whereafter some of the liquid can pass to a vapor and some of the liquid can flow downwardly by gravity to absorb energy and remove fuel contaminants whereafter the liquid can be removed through a drain port 12i. For example, the liquid flowing outwardly through drain port 12i can be at 490° kelvin and 25 bars. Supplying excess liquid to the combustor and allowing the excess liquid to flow downwardly in the combustor for discharge through drainage port 12i has a washing down effect and specifically, and depending upon the fuel employed, removes fuel bound metals such as lead, nickel and vanadium, minerals such as calcium and sulphur, and combustion products such as coke, ash and soot.

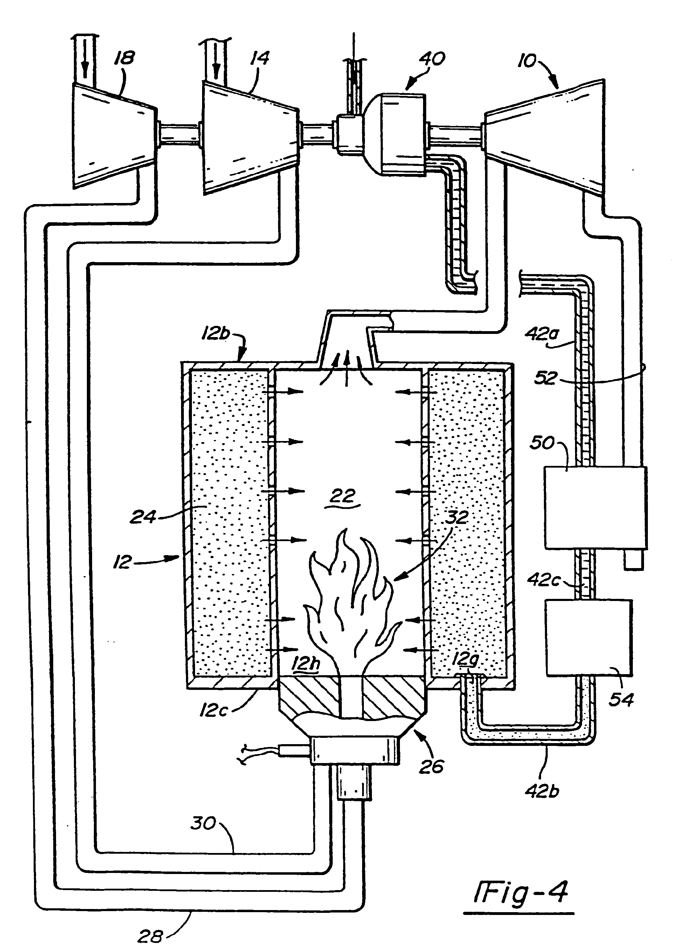

The embodiment of the gas turbine engine assembly seen in Figure 4 is similar to the embodiment seen in Figure 3 with the exception that apparatus 54 is interposed in conduit 42 in a manner which allows apparatus 54 to receive the cooling fluid output of heat exchanger 50 through conduit 42c before the cooling fluid is delivered to cooling chamber 24 through conduit 42b. Apparatus 54 may, for example, comprise a boiler fired by a separate source of energy, such as gas, so that apparatus 54 serves to add further energy to the fluid flowing through conduit 42.

As with the embodiment of Figures 1 and 2 and the embodiment of Figure 3, the nature and behavior of the fluid in cooling chamber 24 may be selectively modified by selectively varying parameters of the system. For example, the pump parameters may be chosen such that water leaves the pump at 330 bars and 300° Kelvin; heat exchanger 50 parameters may be chose such that water leaving the heat exchanger is at 300 bars and 584° Kelvin; and the boiler parameters may be chosen such that superheated steam or water vapor leaves boiler 54 and thereafter enters cooling chamber 24 through inlet 12g at 673° Kelvin and 300 bars. With these parameters, cooling chamber 24 is totally filled with water vapor or gas, and as the vapor or gas resides in the cooling chamber 24, it absorbs energy from the flame front through inner wall 12d whereby to raise the temperature of the vapor or gas in the cooling chamber, whereafter the gas or superheated vapor passes through apertures 12e to join the flame front of r passage out of the discharge aperture 12f and passage with the combustion products to the inlet of the turbine.

As with the embodiment of Figures 1 and 2, and the embodiment of Figure 3, the combined action of the energy absorbed by the vapor residing in cooling chamber 24 and the cooling effect of the vapor as it passes through apertures 12e to joint the flame front, has the effect of reducing the combustor temperature to a temperature below the thermal failure temperature of the combustor and below the temperature at which any significant NOₓ formation takes place. As with the embodiment of Figures 1 and 2, and the embodiment of Figure 3, the temperature of the combustion products leaving the combustion chamber through apertures 12f may be controlled to approximately 1140° Kelvin, assuming combustion chamber 22 is operating a 25 bars and 2300° Kelvin at flame front 32, with an arbitrary combustion rate of 150 kilowatts.

In each of the invention embodiments, it will be seen that the cooling the combustor is accomplished without the use of cooling air. It will further be seen that, in each case, energy is absorbed from the flame front in a two-stage process with the first stage comprising the absorption of energy by the cooling fluid in chamber 24 through inner wall 12d and the second stage comprising the further cooling of the flame front as the fluid in cooling chamber 24 passes through apertures 12e to joint the flame front.

The invention will be seen to provide a simple and efficient means of maintaining the combustor below the temperature at which thermal failure and NOₓ formation occurs without substantially interfering with flame ignition or maintenance, and with out elevating the carbon monoxide levels, unburned hydrocarbon level, or fuel consumption of the engine. Specifically, the invention methodology, requiring only a relatively low energy consumption pump to provide the cooling needs of the combustor as opposed to the relatively high energy air compressors of the prior art, has the effect of increasing the net turbine work output since the energy required to produce the required cooling effect is significantly reduced as compared to systems in which the cooling is achieved utilizing air or a combination of air, water injection and/or steam injection.

Whereas preferred embodiments of the invention have been illustrated and described in detail, it will be apparent that various changes may be made in the disclosed embodiments without departing from the scope or spirit of the invention. For example, although the invention has been described with reference to a liquid or a gas utilized as the cooling substance, the cooling substance may also in certain applications, comprise a suitable alkali metal or Newtonian fluid, and the term substance as used in the claims is intended to include a liquid, gas alkali metal, or Newtonian fluid.

## Claims

1. A combustor (12) for generating combustion products for delivery to a gas turbine (10), said combustor (12) comprising:
a central combustion chamber (22) having one end (12c) and defining a central axis;
a burner (26) to deliver products of combustion to said one end (12c) of said central combustion chamber (22);
a discharge at the opposite end (12b) of said central combustion chamber (22) for delivering combustion products to said turbine (10);
an annular cooling chamber (24) in surrounding relation to said central combustion chamber (22);
an entry opening (12g) in said annular cooling chamber (24) for receipt of a cooling fluid, said entry opening (12g) being arranged adjacent to said one end (12c) of said central combustion chamber (22), said cooling fluid forming a bath (44) within said annular cooling chamber (24) to absorb thermal energy from said combustion products being within said central combustion chamber (22); and
a plurality of apertures (12e) providing communication between said annular cooling chamber (24) and said central combustion chamber (22) proximate said opposite end (12b) of said central combustion chamber (22),
**characterized in that**
the burner (26) is disposed axially adjacent to said one end (12c) of said central combustion chamber (22) and said cooling chamber (24).

2. Combustor (12) according to claim 1,
**characterised in that**
the combustor (12) is designed such that the flow rate of the cooling fluid into the combustion chamber (22) is variable.

3. Combustor according to claim 1 or 2,
**characterised in that**
the temperature and pressure under which the cooling fluid is delivered to the cooling chamber (24) can be varied so that the cooling fluid can enter the combustion chamber (22) either as a liquid or vapour.

4. Combustor according to any of claims 1 to 3,
**characterised in that**
said apertures (12e) are provided in an annular region extending from a midregion of said combustion chamber (22) to said opposite end (12b) of said central combustion chamber (22).

5. Combustor according to any of claims 1 to 4,
**characterised in that**
that the cooling chamber (24) is closed by a wall (12b) at the opposite end (12b) of said combustion chamber (22).

6. Combustor according to any of claims 1 to 5,
**characterised in that**
there is provided a pump (40) which is driven by the turbine (10) for delivering the cooling fluid to the cooling chamber (24).

7. Combustor according to any of claims 1 to 6,
**characterised in that**
there is provided a heat exchanger (50) for delivering thermal energy from the combustion products to the cooling fluid before entering the cooling chamber (24).

8. Combustor according claim 7,
**characterised in that**
there is provided a boiler (54) for further delivering thermal energy from external sources to the cooling fluid before entering the cooling chamber (24).

9. Combustor according to any of claims 1 to 8,
**characterised in that**
that the burner (26) is arranged before the combustor (12) wherein the actual combustion process takes place within the burner (26) utilizing air and fuel delivered to the burner (26).

10. Combustor according to any of claims 1 to 9,
**characterised in that**
the combustor (12) is positioned with its central axis generally vertical, wherein the burner (26) is proximate the lower end of the combustion chamber (22) and the discharge is proximate the upper end of the combustion chamber (22).
